# EUROPEAN PATENT SPECIFICATION

(11) **EP 1 192 692 B1**
(45) Date of publication and mention of the grant of the patent: **03.12.2008**
(21) Application number: 00928071.0
(22) Date of filing: 27.04.2000
(51) Int. Cl.: H02G 3/04, H02G 3/08

(54) **A SYSTEM, SHIELDED FROM ELECTRICAL FIELDS, FOR CONNECTING ELECTRIC CONDUCTORS**
VERBINDUNGSEINRICHTUNG FÜR ELEKTRISCHE LEITUNGEN MIT ELEKTRISCHER FELDABSCHIRMUNG
SYSTEME DE CONNEXION DE CONDUCTEURS ELECTRIQUES, BLINDE CONTRE LES CHAMPS ELECTRIQUES

(30) Priority: 30.04.1999 SE 9901551
(43) Date of publication of application: 03.04.2002
(73) Proprietor: Schneider Electric Industries SAS, 92500 Rueil-Malmaison (FR)
(72) Inventor: KARDEFELT, Björn, S-611 66 Nyköping (SE); SVENSSON, Leif, S-611 38 Nyköping (SE); ERIKSSON, Per, S-611 37 Nyköping (SE); WÄNGSTRE, Håkan, S-611 31 Nyköping (SE)
(74) Representative: Johansson Webjörn, Ingmari
(86) International application number: PCT/SE2000/000797
(87) International publication number: WO 2000/067352

(56) References cited:
- WO-A1-98/09358

## Description

### Technical field

The present invention relates to a system shielded from electrical fields, comprising a terminal box shielded from electrical fields, for electric conductors, said terminal box having a casing in which connection pieces are arranged for the connection of sleeves for drawing or running electric conductors. The casing and connection pieces of the terminal box are produced in layers, at least one layer of which consists of an electrically conducting material and, in relation thereto, an inner layer consists of an electrically insulating material. Sleeves and jointing sleeves are similarly shielded from electrical fields and form a shielded unit together with the terminal box.

### Background art

It is desirable to shield conductors, and also other electrical components for alternating current, so that no electrical fields occur near them. A system for achieving shielding at terminal boxes with their sleeve connections is known through Swedish patent publication SE 506 813, corresponding to the international patent publication WO 98/09358. This system includes a terminal box provided with connection pieces for sleeves, which is made of an electrically conducting plastic. The connection pieces, the insides of which are electrically conducting, communicates with sleeves having an exterior which is electrically conducting, thereby forming a coherent shield for electrical fields. The interior of the terminal box, with the exception of the interior of the connection pieces, is provided with a layer of an insulating plastic material, like the interior of the sleeves.

A drawback with this system is that the terminal box must be manufactured in two injection moulding operations, the outer, electrically conducting casing being injected in a first operation and the inner layer being subsequently injected in a second operation. This is a more expensive procedure than injection moulding several layers in a single operation but it is necessary since the interior of the connection pieces cannot be covered by any electrically insulating layer that would insulate the casing from the electrically conducting exterior of the sleeves.

Another drawback is that the casing as such must be manufactured from an electrically conducting material which is both more expensive than conventional, non-conducting materials and is also black in colour since the electrical conductivity is achieved with the aid of carbon powder. Systems exist in the electrical installation branch for identifying terminal boxes, that are based on the use of different colours for different specific purposes and are of great assistance to electricians, but which are not applicable with the known system.

A further drawback with the known system is that both terminal box and sleeves may unintentionally become current-carrying and cause personal injuries.

### Description of the invention

The object of the present invention is to offer a system that does not have the drawbacks of the known system.

The object is achieved with a system shielded from electrical fields comprising the features of claim 1. The casing and connection pieces of the terminal box are produced in layers, at least one layer of which consists of an electrically conducting material and, in relation thereto, an inner layer consists of an electrically insulating material. The box has preferably three layers, the middle layer consisting of an electrically conducting plastic material. All layers in the box are preferably produced by means of injection moulding in a single operation and are therefore to be found in all parts of the box, i.e. also in the connection pieces, the latter therefore having an insulating layer on the inside. The outer layer may be made of plastic material in different colours for boxes intended for different applications.

Each sleeve is individually shielded from electrical fields and has at least one sheath consisting of an electrically conducting material and, in relation thereto, an inner sheath consisting of an electrically insulating material. The sleeves may also advantageously be manufactured in three layers. A commercially available sleeve consists of a metal sheath of aluminium that is coated on the outside and inside with insulating layers or insulating sheaths. This sleeve is extremely suitable for use in the system in accordance with the invention.

At least one contact member is arranged at each connection piece and is connected to the electrically conducting layer in the terminal box and, when a sleeve is inserted into the connection piece, connects this layer to the electrically conducting sheath in the sleeve. The contact member may be arranged to be connected to the electrically conducting sheath of the sleeve when the sleeve is inserted into the connection piece by means of the possible outer sheath being stripped at the inner end of the sleeve inside the connection piece. Alternatively the contact member may be arranged to cut through any outer sheath and be in contact with the electrically conducting sheath when the sleeve is inserted into the connection piece.

Two sleeves may be united by means of a jointing sleeve consisting in principle of two joined connection pieces having the same layers as in the terminal box and being provided with contact members which, when joined together, are brought into contact with the electrically conducting sheaths of the sleeve and form a closed shield against electrical fields.

### Description of the drawings

The invention is described in the following in the form of an embodiment by way of example, with reference to the accompanying drawings.
- Figure 1: shows a terminal box in accordance with the invention seen in a section at right angles to its bottom,
- Figure 2: shows an enlarged detail, marked A in Figure 1,
- Figure 3: shows a sleeve for electric conductors in longitudinal section, inserted into a connection piece of the terminal box in accordance with Figure 1.

In the system illustrated in the drawings a terminal box 1 is manufactured of plastic and comprises a casing 2 consisting of a bottom surrounded by a substantially cylindrical wall in which connection pieces 3 for sleeves 4 are arranged. Electric conductors, primarily for alternating current with a voltage of 220 V, for instance, not shown in the drawings, are intended to be placed in the sleeves 4 and connected in various ways to each other inside the terminal box.

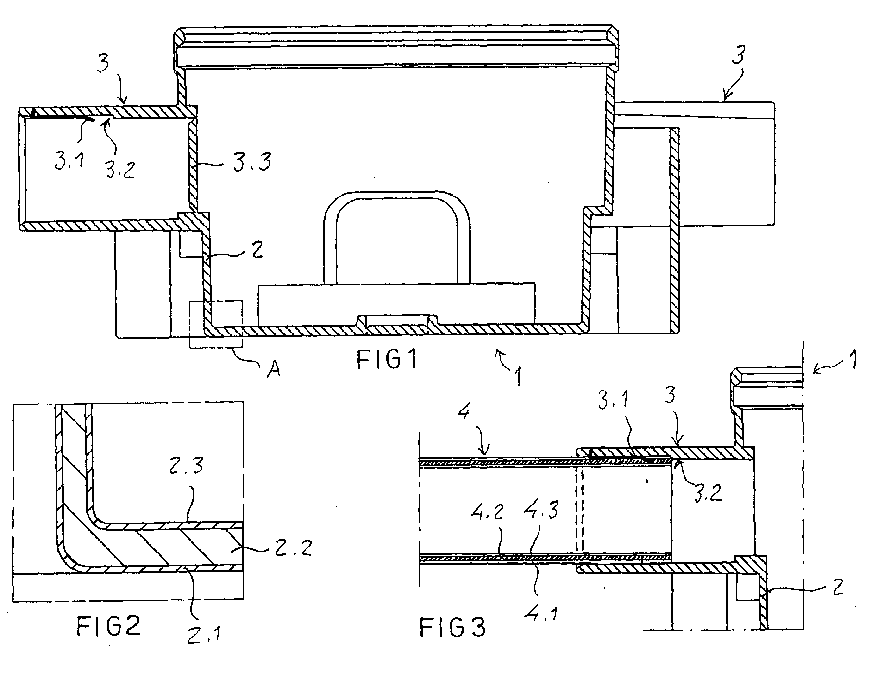

As is clear in Figure 2, showing an enlarged view of a portion of the bottom and wall of the box 1 marked A in Figure 1, the casing 2 of the terminal box 1 is produced in three layers comprising an outer layer 2.1 consisting of an electrically insulating plastic material, a middle layer 2.2 consisting of an electrically conducting material such as plastic with carbon powder mixed in, for instance, and an inner layer 2.3 consisting of an electrically insulating material that may be the same as that in the outer layer 2.1 or may consist of a plastic material having a different composition. The connection pieces 3 and other components of the box 1 are also composed of these three layers which are applied by injection-moulding three consecutive doses of plastic material in a single "shot".

The sleeve 4 shown inserted into a connection piece 3 in Figure 3 is also manufactured in three different layers, an outer sheath 4.1 consisting of an electrically insulating material, a middle sheath 4.2 consisting of thin-walled metal, and an inner sheath 4.3 consisting of an insulating plastic.

Each connection piece 3 on the box 1 has a contact member 3.1 applied on the inside of the connection piece 3, in the form of a thin metal plate, one end of which is pressed through the inner insulating layer 2.3 to effect contact with the electrically conducting middle layer 2.2 and the other end of which protrudes inside the connection piece 3. The contact member 3.1 is intended to be brought into contact with the metal sheath 4.2, thereby creating an electrical connection between the metal sheath 4.2 in the sleeve 4 and the electrically conducting middle layer 2.2 in the terminal box 1. The contact between the contact member 3.1 and the metal sheath 4.2 is achieved in the example shown by stripping the outer plastic sheath 4.1 off the end of the sleeve 4 before it is inserted into the connection piece 3. The connection piece is provided with a stop lug 3.2 so that the sleeve 4 can be pushed in as far as the stop position, thus guaranteeing that the stripped part of the sleeve 4 extends sufficiently far to ensure that the contact member 3.1 comes into contact with the metal sheath 4.2.

It may also be mentioned in connection with Figures 1 and 3 that, at injection moulding the terminal box 1 is provided with sealing washers 3.3 that are included in the terminal box 1 as shown in Figure 1, but which are removed before the sleeve 4 is inserted into the connection piece 3, as shown in Figure 3. The terminal box 1 may also be provided with a lid, not shown in the drawings. The lid may be constructed in three layers in the same way as the box 1, the middle layer of which is electrically conducting and can be brought into contact with the corresponding layer in the box by means of screws connecting these layers, for instance.

A jointing sleeve, not shown in the drawings, may be used for the purpose of joining two sleeves 4 end-to-end, and is in principle composed of two joined connection pieces 3 with three layers like the terminal box 1. The contact member 3.1 in each jointing sleeve effects an electrical connection between the sleeves via the jointing sleeve.

## Claims

1. A system shielded from electrical fields, comprising a terminal box (1) for electric conductors, having a casing (2) comprising a bottom surrounded by a wall in which connection pieces (3) are arranged for the connection of sleeves (4) for running electric conductors, the casing (2) and connection pieces (3) of the terminal box (1) being produced in layers, at least one layer (2.2) of which consists of an electrically conducting material and, in relation thereto, an inner layer (2.3) consists of an electrically insulating material, wherein each sleeve (4) is individually shielded from electrical fields and has at least one sheath (4.2) consisting of an electrically conducting material and, in relation thereto, an inner sheath (4.3) consisting of an electrically insulating material, **characterized in that** at least one contact member (3.1) is arranged on the inside of each connection piece (3) and is connected to the electrically conducting layer (2.2) in the terminal box (1) and, when a sleeve (4) is inserted into the connection piece (3), connects this layer (2.2) to the electrically conducting sheath (4.2) in the sleeve (4).

2. A system as claimed in claim 1, **characterized in that** the casing (2) of the terminal box (1) is provided with an outer layer (2.1) consisting of an electrically insulating material.

3. A system as claimed in claim 1 or claim 2, **characterized in that** the sleeve (4) is provided with an outer sheath (4.1) consisting of an electrically insulating material, and **in that** the contact member (3.1) is arranged to be connected to the electrically conducting sheath (4.2) when the sleeve (4) is inserted into the connection piece (3), the outer sheath (4.1) being stripped at the inner end of the sleeve (4) in the connection piece (3).

4. A system as claimed in claim 1 or claim 2, **characterized in that** the sleeve (4) is provided with an outer sheath (4.1) consisting of an electrically insulating material, and **in that** the contact member (3.1) is arranged to cut through the outer sheath (4.1) and be in contact with the electrically conducting sheath (4.2) when the sleeve (4) is inserted into the connection piece (3).

5. A system as claimed in any one of claims 1-4, **characterized in that** two sleeves (4) are joined by means of a jointing sleeve consisting of two joined connection pieces (3) having the same layers (2.1, 2.2, 2.3) as in the terminal box (1) and being provided with contact members (3.1).

## Patentansprüche

1. Ein von elektrischen Feldern abgeschirmtes System umfassend eine Anschlussbox (1) für elektrische Leiter, mit einem Gehäuse (2) umfassend einen Boden, der von einer Wand umgeben ist, in der Verbindungsstücke (3) angeordnet sind für die Verbindung von Hülsen (4) für die Verlegung von elektrischen Leitern, wobei das Gehäuse (2) und die Verbindungsstücke (3) der Anschlussbox (1) in Schichten hergestellt sind, von denen zumindest eine Schicht (2.2) aus einem elektrisch leitfähigen Material besteht und in Relation dazu eine innere Schicht (2.3) aus einem elektrisch isolierenden Material besteht, wobei jede Hülse (4) individuell von elektrischen Feldern abgeschirmt ist und zumindest eine Hülle (4.2) aufweist, die aus einem elektrisch leitfähigen Material besteht, und in Relation dazu eine innere Hülle (4.3) aufweist die aus einem elektrisch isolierenden Material besteht, **dadurch gekennzeichnet, dass** zumindest ein Kontaktelement (3.1) an der Innenseite eines jeden Verbindungsstückes (3) angeordnet ist und mit der elektrisch leitfähigen Schicht (2.2) in der Anschlussbox (1) verbunden ist und, wenn eine Hülse (4) in das Verbindungsstück (3) eingesetzt ist, diese Schicht (2.2) mit der elektrisch leitfähigen Hülle (4.2) in der Hülse (4) verbindet.

2. System nach Anspruch 1, **dadurch gekennzeichnet, dass** das Gehäuse (2) der Anschlussbox (1) mit einer äußeren Schicht (2,1) versehen ist, die aus einem elektrisch isolierenden Material besteht.

3. System nach Anspruch 1 oder 2, **dadurch gekennzeichnet, dass** die Hülse mit einer äußeren Hülle (4 J) versehen ist, die aus einem elektrisch isolierenden Material besteht, und dass das Kontaktelement (3.1) angeordnet ist, um mit der elektrisch leitfähigen Hülle (4.2) verbunden zu sein, wenn die Hülse (4) in das Verbindungsstück (3) eingesetzt ist, wobei die äußere Hülle (4.1) am inneren Ende der Hülse (4) im Verbindungsstück (3) gestrippt ist.

4. System nach Anspruch oder 2, **dadurch gekennzeichnet, dass** die Hülse (4) mit einer äußeren Hülle (4.1) versehen ist, die aus einem elektrisch isolierenden Material besteht, und dass das Kontaktelement (3,1) angeordnet ist, um durch die äußere Hülle (4.1) zu schneiden und in Kontakt mit der elektrisch leitfähigen Hülle (4.2) zu stehen, wenn die Hülse (4) in das Verbindungsstück (3) eingesetzt ist.

5. System nach einem der Anspruche 1 bis 4, **dadurch gekennzeichnet, dass** zwei Hülsen (4) mittels einer Verbindungshülse verbunden sind, die aus zwei verbundenen Verbindungsstücken (3) bestehen, die dieselben Schichten (2.1, 2.2, 2.3) wie in der Anschlussbox (1) aufweisen und mit Kontaktelementen (3,1) versehen sind.

## Revendications

1. Système protégé contre les champs électriques, comprenant un bornier (1) pour conducteurs électriques, ayant un boîtier (2) comprenant un fond entouré d'une paroi dans laquelle des pièces de connexion (3) sont agencées pour la connexion de manchons (4) de conducteurs électriques passants, le boîtier (2) et les pièces de connexion (3) du bornier (1) étant produits en couches, dont au moins une couche (2.2) consiste en une matière électriquement conductrice et, relativement à celle-ci, une couche interne (2.3) consiste en une matière électriquement isolante, dans lequel chaque manchon (4) est protégé individuellement contre les champs électriques et comporte au moins une gaine (4.2) consistant en une matière électriquement conductrice et, relativement à celle-ci, une gaine interne (4.3) consistant en une matière électriquement isolante, **caractérisé en ce qu'**au moins un élément de contact (3.1) est agencé sur l'intérieur de chaque pièce de connexion (3) et est connecté à la couche électriquement conductrice (2.2) dans le bornier (1) et, quand un manchon (4) est inséré dans la pièce de connexion (3), connecte cette couche (2.2) à la gaine électriquement conductrice (4.2) dans le manchon (4).

2. Système selon la revendication 1, **caractérisé en ce que** le boîtier (2) du bornier (1) est doté d'une couche externe (2.1) qui consiste en une matière électriquement isolante.

3. Système selon la revendication 1 ou la revendication 2, **caractérisé en ce que** le manchon (4) est doté d'une gaine externe (4.1) consistant en une matière électriquement isolante, et **en ce que** l'élément de contact (3.1) est agencé pour être connecté à la gaine électriquement conductrice (4.2) quand le manchon (4) est inséré dans la pièce de connexion (3), la gaine externe (4.1) étant dénudée à l'extrémité interne du manchon (4) dans la pièce de connexion (3).

4. Système selon la revendication 1 ou la revendication 2, **caractérisé en ce que** le manchon (4) est doté d'une gaine externe (4.1) qui consiste en une matière électriquement isolante, et **en ce que** l'élément de contact (3.1) est agencé pour transpercer la gaine externe (4.1) et être en contact avec la gaine électriquement conductrice (4.2) quand le manchon (4) est inséré dans la pièce de connexion (3).

5. Système selon l'une quelconque des revendications 1 à 4, **caractérisé en ce que** deux manchons (4) sont joints au moyen d'un manchon de jointement consistant en deux pièces de connexion (3) jointes qui ont les mêmes couches (2.1, 2.2, 2.3) que dans le bornier (1) et qui sont dotées d'éléments de contact (3.1).
